# EUROPÄISCHE PATENTSCHRIFT

(11) **EP 1 172 802 B1**
(45) Veröffentlichungstag und Bekanntmachung des Hinweises auf die Patenterteilung: **08.08.2007**
(21) Anmeldenummer: 01115523.1
(22) Anmeldetag: 27.06.2001
(51) Int. Cl.: G10L 15/06

(54) **Sprecherabhängige Adaption der phonetischen Transkriptionen eines Aussprache-Lexikons**
Method for adapting to a speaker the phonetic transcriptions of a pronunciation lexicon
Adaptation à un locuteur des transcriptions phonétiques d'un lexique de prononciation

(30) Priorität: 14.07.2000 DE 10034249
(43) Veröffentlichungstag der Anmeldung: 16.01.2002
(73) Patentinhaber: SIEMENS AKTIENGESELLSCHAFT, 80333 München (DE)
(72) Erfinder: Harengel, Steffen, 80689 München (DE); Niemöller, Meinrad, 83607 Holzkirchen (DE)

(56) Entgegenhaltungen:
- EP-A- 0 342 630
- WO-A-96/37881
- SLOBADA T ET AL: "Dictionary learning for spontaneous speech recognition" SPOKEN LANGUAGE, 1996. ICSLP 96. PROCEEDINGS., FOURTH INTERNATIONAL CONFERENCE ON PHILADELPHIA, PA, USA 3-6 OCT. 1996, NEW YORK, NY, USA,IEEE, US, 3. Oktober 1996 (1996-10-03), Seiten 2328-2331, XP010238131 ISBN: 0-7803-3555-4
- PATENT ABSTRACTS OF JAPAN vol. 016, no. 436 (P-1419), 11. September 1992 (1992-09-11) & JP 04 151200 A (EI TEI AARU JIDOU HONYAKU DENWA KENKIYUUSHIYO:KK), 25. Mai 1992 (1992-05-25)

## Beschreibung

Die Erfindung betrifft ein Verfahren zur sprecher-spezifischen Adaption der phonetischen Transkriptionen eines Aussprachelexikons phonetischer Transkriptionen nach dem Oberbegriff des Anspruchs 1.

Für den praktischen Einsatz von Spracherkennungssystemen ist eine wirksame und flexible Sprecheradaption, d. h. die Anpassung des Systems an die konkrete Sprachfärbung und Aussprache und die Sprechgewohnheiten realer Sprecher, unverzichbar. Neben der erwähnten Flexibilität, d. h. der Adaptionsfähigkeit für Sprecher mit sehr unterschiedlicher Aussprache bei Wahrung einer hohen Erkennungsgenauigkeit, stellt die benötigte Trainingszeit ein wesentliches Gebrauchswertkriterium von Verfahren und Systemen zur Spracherkennung dar. In diesem Zusammenhang ist eine gewisse Lernfähigkeit des Systems von großem Wert.

Bekannte Spracherkennungssysteme nutzen Aussprache-Lexika als Wissensbasis für die sprecherunabhängige Spracherkennung. In derartigen Aussprache-Lexika wird für jedes Wort des Wortschatzes eine phonetische Transkription in einem bestimmten Format (beispielsweise dem Sampa-Format) angegeben. Hierbei handelt es sich um sogenannte "kanonische Formen", die einem Aussprachestandard entsprechen. Es ist auch die Speicherung und Verwendung mehrerer phonetischer Transkriptionen für ein Wort möglich. Von dieser Möglichkeit wird insbesondere für Worte Gebrauch gemacht, für die es mehrere allgemein anerkannte Aussprachevarianten gibt. Der den kanonischen Formen zugrundeliegende Aussprachestandard wird von realen Sprechern aufgrund ihrer Sprachfärbung, ihres Dialektes oder persönlicher Sprecheigenschaften nur bedingt eingehalten.

Es ist daher erforderlich, die kanonischen Formen der Transkriptionen in einem Aussprache-Lexikon für einen Nutzer (oder eine Mehrzahl von Nutzern) eines Spracherkennungssystems derart zu adaptieren, daß das Spracherkennungssystem die sprecher-spezifischen Eigenschaften weitestgehend berücksichtigt und optimale Erkennungsergebnisse erzielt.

Nach dem Stand der Technik werden sprecher-spezifische Adaptionen bzw. Trainingsvorgänge überwiegend auf Lautebene durchgeführt. Hierbei werden in einem auf Hidden-Markov-Modellen (HMM) basierenden Spracherkennungssystem Phoneme oder Phonemsegmente als Zustände im Hidden-Markov-Modell trainiert. In einem späteren Schritt spricht dann ein Sprecher, auf den das System zu trainieren ist, vorgegebene Texte ein, und das Spracherkennungssystem führt die Adaption auf der Ebene der HMM-Zustände aufgrund dieses Mustertextes durch.

Eine weitere bekannte Lösung besteht im Einsatz eines Phonem-Erkenners. Hierbei werden die zu adaptierenden Äußerungen nicht einer integrierten Suche von Worten und Sätzen mit einem Sprachmodell unterzogen, sondern es wird im Ergebnis eines speziellen Suchvorganges nur die wahrscheinlichste Phonemfolge für die jeweilige Äußerung ausgegeben. Hiermit läßt sich für jedes adaptierte Wort eine Phonemfolge bestimmen und anstelle der kanonischen Form oder alternativ zu dieser in das Aussprache-Lexikon eintragen. Nachteilig bei dieser Methode ist, daß das Spracherkennungssystem keine Information über die Änderungen der kanonischen Aussprachen durch den speziellen Sprecher erhält und daher auch nicht im Sinne eines Selbstlernvorganges nutzen kann. Dies führt dazu, daß jedes adaptierte Wort als eine Aussprachevariante zusätzlich in das Aussprache-Lexikon eingetragen werden muß. Das Aussprache-Lexikon als Wissensbasis für die Spracherkennung wird damit schnell sehr umfangreich, was die Erkennungsgeschwindigkeit des Systems verringert.

Ein Beispiel für eine bekannte Technik zur Sprecheradaption eines Phonem-Erkenners ist in der Schrift SLOBADA T ET AL: "Dictionary Learning for Spontaneous Speech Recognition" FOURTH INTERNATIONAL CONFERENCE SPOKEN LANGUAGE ICSLP 96,1996, PROCEEDINGS, PHILADELPHIA, PA, USA 3-6 OCT. 1996, NEW YORK (USA), IEEE, 3. Oktober 1996, Seiten 2328-2331, XP010238131 veröffentlicht.

Der Erfindung liegt daher die Aufgabe zugrunde, ein verbessertes Verfahren zur Spracherkennung der gattungsgemäßen Art anzugeben, das insbesondere ein schnelles Training sowie eine hohe Erkennungsgeschwindigkeit des trainierten (adaptierten) Systems ermöglicht.

Diese Aufgabe wird durch ein Verfahren mit den Merkmalen des Anspruchs 1 gelöst.

Die Erfindung schließt den grundlegenden Gedanken ein, zum Training eines Spracherkennungssystems im Sinne der Sprecheradaption ein neuronales Netz einzusetzen. Sie schließt weiter den Gedanken ein, die Änderungen der kanonischen Formen eines Aussprache-Lexikons durch den jeweiligen Sprecher im System zu verarbeiten. Dazu werden - was insoweit an sich bekannt ist - die Äußerungen eines Sprechers einem Phonem-Erkenner präsentiert, der daraus jeweils eine Phonemfolge generiert. Anstatt jedoch die erzeugten Phonemfolgen als solche direkt in das Aussprache-Lexikon einzutragen, wird vielmehr für jedes adaptierte bzw. trainierte Wort ein K-P-Tupel aus kanonischer Form K der Aussprache und der vom Phonem-Erkenner erzeugten Phonemfolge P abgespeichert.

Im weiteren Verlauf des Trainings werden die K-P-Tupel aller eingesprochenen Worte dem neuronalen Netz präsentiert, und dieses wird trainiert, indem die vom Phonem-Erkenner generierte Phonemfolge P in der analogen Repräsentation als Zielwerte für Ausgabeknoten des Netzes vorgegeben wird. Als Eingangsknoten wird eine geeignete Repräsentation der kanonischen Form K der Aussprache des betreffenden Wortes gewählt.

Das vorgeschlagene Verfahren hat als einen wesentlichen Vorteil, daß bei dem Training bzw. der Adaption nicht nur zeitlich kurze Kontexte auf Phonembasis gelernt werden, sondern daß es die typische Aussprache von größeren Kontexten, insbesondere Silben, sprecher-spezifisch verarbeitet. Ein weiterer Vorteil besteht darin, daß eine vom neuronalen Netz gelernte Zuordnung zwischen kanonischer Form und sprecher-spezifischer Phonemfolge (Abbildung K-P*) nicht nur für während der Trainingsphase vorkommende Worte eingesetzt werden kann. Vielmehr können auch für Worte, die während der Adaption noch nicht Teil des Wortschatzes waren, also nicht im Aussprache-Lexikon enthalten waren, sprecher-spezifische Transkriptionen erzeugt und schließlich in das Aussprache-Lexikon eingetragen werden.

Für das neuronale Netz wird insbesondere ein sogenanntes "Multilayer-Perzeptron" (MLP) verwendet. Hierbei handelt es sich um ein schichtorientiertes, vorwärts gerichtetes ("feed forward") Netz mit Vollvermaschung zwischen den einzelnen Schichten.

Als Aktivierungsfunktion wird die Sigmoidfunktion Sc(x) oder die Tangenshyperbolicusfunktion tanh(x) eingesetzt, wobei es auf die konkrete Wahl der Aktivierungsfunktion sowie die Anzahl der Schichten des neuronalen Netzes nicht ankommt. Zur Erzielung einer hohen Trainingsgenauigkeit muß allerdings die Anzahl der variablen Parameter ausreichend groß sein. Diese wird bestimmt durch die Anzahl der Schichten sowie die Anzahl von Neuronen in der versteckten Schicht bzw. versteckten Schichten.

Die Eingangsschicht des neuronalen Netzes weist eine Mehrzahl von Knoten als (kanonische) Phonemfenster auf, in die die jeweilige kanonische Form K "hineingeschoben" wird. Ein mittlerer Knoten der Eingangsschicht ist jeweils das zu betrachtende Phonem, für das die Zuordnung zu dem zugehörigen Phonem der (sprecher-spezifischen) Phonemfolge P in der Trainingsphase trainiert bzw. in der Anwendungsphase gesucht wird. Weitere Knoten der Eingangsschicht enthalten die der betrachteten kanonischen Form zeitlich benachbarten, d. h. zeitlich vorangehenden und nachfolgenden, (kanonischen) Phoneme. Diese werden zur Erreichung einer hohen Genauigkeit bei der Adaption des betrachteten Phonems als Kontextwissen (z. B. bezüglich der Aussprache einer Silbe) benötigt.

Für eine optimale Verfahrensführung ist von Bedeutung, daß die Fenstergröße der Eingangsschicht nur so groß gewählt wird, wie es für die Erfassung des erwähnten Kontextwissens erforderlich ist. Die Fenstergröße wird sinnvoll derart gewählt, daß nicht die kanonische Form eines ganzen Wortes verarbeitet wird, sondern lediglich das Kontextwissen auf Silbenebene. Dadurch wird insbesondere gewährleistet, daß die Phoneme neuer, im Sprachsystem noch unbekannter Wörter - die also nicht Bestandteil des Trainings sind - korrekt umgesetzt werden.

Die Ausgangsschicht enthält zunächst eine der Anzahl der möglichen Phoneme entsprechende Anzahl von Ausgangsknoten, mit denen also das vollständige "Phoneminventar" abgedeckt wird. Weiterhin gibt es für die Ausgangsschicht einen "Platzhalter", um unterschiedliche Phonemlängen der Tupel (K, P) abbilden zu können.

Das neuronale Netz wird insbesondere mittels eines iterativen Verfahrens trainiert, bei dem als Lernregel speziell die sogenannte "Error Backpropagation" eingesetzt wird. Bei diesem Verfahren wird der mittlere quadratische Fehler minimiert. Mit dieser Lernregel ist die Berechnung von Rückschlußwahrscheinlichkeiten möglich, und beim Training werden diese Rückschlußwahrscheinlichkeiten für alle Ausgangsknoten (Phoneme) für das vorgegebene kanonische Phonemfenster der Eingangsschicht berechnet. Das Netz wird mit den Trainingsmustern in mehreren Iterationen trainiert, wobei für jede Iteration die Trainingsreihenfolge vorzugsweise zufällig bestimmt wird. Nach jeder Iteration wird mit einem vom Trainingsmaterial unabhängigen Validierungssatz die erzielte Transkriptionsgenauigkeit geprüft. Der Trainingsvorgang wird solange fortgeführt, wie nach jeder folgenden Iteration eine Erhöhung der Transkriptionsgenauigkeit erzielt wird. An einem Punkt, bei dem die Transkriptionsgenauigkeit für den Validierungssatz sich nicht mehr erhöht, wird also das Training beendet.

Nach Abschluß des Trainings, also nachdem das neuronale Netz die Abbildung der kanonischen Formen K auf sprecher-spezifische Phonemfolgen P gelernt hat, wird das Aussprache-Lexikon aktualisiert. Die dort eingetragenen Transkriptionen mit kanonischen Formen K werden um Transkriptionen mit sprecher-spezifischen Phonemfolgen P* (als Aussprachevarianten) ergänzt. Insbesondere wird nach einem abgeschlossenen Trainingszyklus für jedes Wort im Aussprache-Lexikon die jeweilige kanonische Form dem neuronalen Netz präsentiert, aus den Ausgabewerten der zugehörigen Ausgangsknoten die sprecher-spezifische Transkription P* erzeugt und diese unter dem jeweiligen Wort in das Aussprache-Lexikon eingetragen.

Die Nutzung bekannter Spracherkennungssysteme setzt in der Regel die Ausführung eines sogenannten "Enrollment" durch einen die Benutzung planenden Sprecher voraus. Dieses Enrollment beinhaltet in der Regel das Einsprechen von vorgegebenen Texten durch den Sprecher, und das System führt auf dieser Grundlage die sprecher-spezifische Adaption der Wissensbasis aus. Im Rahmen dieses Einsprechens läßt sich die oben beschriebene Abbildung K-P* durch das erfindungsgemäß angewandte neuronale Netz erlernen und direkt zur Verbesserung des mitgelieferten Aussprache-Lexikons nutzen. Beim anschließenden praktischen Einsatz des Spracherkennungssystems wird in der Regel - im Sinne eines "Perfektionierungs-Trainings" - die Korrektur falsch erkannter Worte durch den Benutzer vorgesehen. Die Ergebnisse der Korrekturen werden für einen nachfolgenden Adaptionsschritt gesammelt. Auch im Rahmen der Erweiterung des Wortschatzes beim Einsatz des Spracherkennungssystems durch den Benutzer wird dieser vielfach dazu aufgefordert, neue Worte nicht nur als Text, also orthografisch, sondern auch als Sprechprobe einzugeben. Die auf diesen Wegen über einen gewissen Zeitraum gesammelten neuen Einträge können in Kombination mit den Äußerungen aus der Enrollement-Phase zu einem verbesserten Training des neuronalen Netzes eingesetzt werden.

Vorteile und Zweckmäßigkeiten der Erfindung ergeben sich im übrigen aus den Unteransprüchen.

Die Erfindung ist nicht auf die oben erwähnten bevorzugten Ausgestaltungen und Aspekte beschränkt, sondern im Rahmen der Ansprüche auch in einer Reihe von Abwandlungen ausführbar, die im Rahmen fachgemäßen Handelns liegen.

## Patentansprüche

1. Verfahren zur sprecher-spezifischen Adaption der phonetischen Transkriptionen eines Aussprache-Lexikons von als kanonische Formen gewählten phonetischen Transkriptionen eines Wortschatzes in einem vorbestimmten Format und unter Ausführung einer Sprecheradaption mittels eines Phonem-Erkenners, der aus jedem von einem spezifischen Sprecher ausgesprochenen Wort eine Phonemfolge generiert,
**dadurch gekennzeichnet, daß**
- sprecherbezogen für jedes ausgesprochene Wort die generierte Phonemfolge P in Zuordnung zu einer im Aussprache-Lexikon gespeicherten kanonischen Form K als K-P-Tupel gespeichert,
- die gespeicherte Zuordnung einem durch die kanonische Form K definierten Eingangsknoten eines neuronalen Netzes zugeführt und
- in dem neuronalen Netz die Sprecheradaption trainiert wird, wobei die Phonemfolge P dem neuronalen Netz als Zielwert für Ausgabeknoten vorgegeben wird.

2. Verfahren nach Anspruch 1,
**dadurch gekennzeichnet, daß**
das neuronale Netz ein solches ist, bei dem der mittlere quadratische Fehler minimiert wird, wobei als Aktivierungsfunktion insbesondere die Sigmoidfunktion Sc(x) oder die Tangenshyperbolicusfunktion tanh(x) verwendet wird.

3. Verfahren nach Anspruch 1 oder 2,
**dadurch gekennzeichnet, daß**
als neuronales Netz ein schichtorientiertes, vorwärts gerichtetes Netz mit Vollvermaschung zwischen den einzelnen Schichten eingesetzt wird, dessen Eingangsschicht eine Mehrzahl von Knoten als kanonische Phonemfenster aufweist.

4. Verfahren nach Anspruch 3,
**dadurch gekennzeichnet, daß**
die Eingangsschicht einen mittleren Knoten für ein zu betrachtendes Phonem der Phonemfolge und weitere Knoten aufweist, die die dem zu betrachtenden Phonem zeitlich beidseits benachbarten Phoneme der betrachteten kanonischen Form als Kontextwissen enthalten.

5. Verfahren nach Anspruch 3 oder 4,
**dadurch gekennzeichnet, daß**
die Fenstergröße der Phonemfenster derart vorbestimmt wird, das sie im wesentlichen das Kontextwissen auf Silbenebene aufnehmen.

6. Verfahren nach einem der vorangehenden Ansprüche,
**dadurch gekennzeichnet, daß**
das Training als iterativer Vorgang, insbesondere aufgrund der Lernregel der "Error Backpropagation" ausgeführt wird.

7. Verfahren nach Anspruch 6,
**dadurch gekennzeichnet, daß**
- für jede Iteration eine Reihenfolge von Trainingsmustern mittels eines Zufallsgenerators bestimmt wird,
- nach jeder Iteration anhand eines vom Trainingsmaterial unabhängigen Validierungssatzes die erzielte Transkriptionsgenauigkeit ermittelt wird und
- die Iterationen solange fortgeführt werden, wie mit jeder neuen Iteration eine Erhöhung der Transkriptionsgenauigkeit des Validierungssatzes erzielt wird.

8. Verfahren nach einem der vorangehenden Ansprüche,
**dadurch gekennzeichnet, daß**
nach einem Trainingsvorgang im Aussprache-Lexikon der trainierten Transkription in kanonischer Form mindestens eine Sprecher-spezifische Phonemfolge hinzugefügt wird.

9. Verfahren nach Anspruch 8,
**dadurch gekennzeichnet, daß**
nach einem Trainingszyklus für jedes Wort aus dem Aussprache-lexikon die zugehörige kanonische Form dem neuronalen Netz präsentiert und aus dem entsprechenden Ausgabewert der Ausgangsknoten die jeweilige sprecher-spezifische Transkription erzeugt und bei dem Wort abgespeichert wird.

## Claims

1. Method for speaker-specific adaptation of the phonetic transcriptions of a pronunciation lexicon from phonetic transcriptions of a vocabulary selected as canonical forms to a predefined format and during execution of a speaker adaptation by means of a phoneme identifier, which generates a phoneme sequence from every word spoken by a specific speaker,
**characterised in that**
- the generated phoneme sequence P is stored in assignment to a canonical form C stored in the pronunciation lexicon as a C-P tuple in a speaker-related manner for every spoken word,
- the stored assignment is fed to an input node of a neural network defined by the canonical form C and
- the speaker adaptation is trained in the neural network, with the phoneme sequence P being predetermined for the neural network as a target value for output nodes.

2. Method according to claim 1,
**characterised in that**
the neural network is such a neural network, wherein the mean square error is minimised, with the sigmoid function Sc(x) or the tangens hyperbolicus function tanh(x) being used in particular as the activating function.

3. Method according to claim 1 or 2,
**characterised in that**
a layer-based, forward oriented network with full intermeshing between the individual layers is deployed as the neural network, the input layer of said network having a plurality of nodes as canonical phoneme windows.

4. Method according to claim 3,
**characterised in that**
the input layer has a central node for a phoneme of the phoneme sequence to be considered and further nodes, which contain the phonemes of the considered canonical form adjacent temporally on both sides to the phoneme to be considered as context knowledge.

5. Method according to claim 3 or 4,
**characterised in that**
the window size of the phoneme window is predefined such that it essentially holds the context knowledge at syllable level.

6. Method according to one of the preceding claims,
**characterised in that**
the training is executed as an iterative process, in particular based on the learning rule of error backpropagation.

7. Method according to claim 6,
**characterised in that**
- for every iteration a series of training specimens is defined by means of a random generator,
- after every iteration the transcription accuracy achieved is determined using a validation record that is independent of the training material and
- the iteration is continued for as long as an increase in transcription accuracy is achieved with every subsequent iteration.

8. Method according to one of the preceding claims,
**characterised in that**
after a training process in the pronunciation lexicon at least one speaker-specific phoneme sequence is added to the trained transcription in canonical form.

9. Method according to claim 8,
**characterised in that**
after a training cycle for every word from the pronunciation lexicon the associated canonical form is presented to the neural network and the respective speaker-specific transcription is generated from the corresponding output value of the output nodes and stored with the word.

## Revendications

1. Procédé pour l'adaptation spécifique à un locuteur des transcriptions phonétiques d'un lexique de prononciation de transcriptions phonétiques choisies sous forme canonique d'un vocabulaire dans un format prédéterminé et en réalisant une adaptation au locuteur au moyen d'un reconnaisseur de phonèmes qui génère une suite de phonèmes à partir de chaque mot prononcé par un locuteur spécifique,
**caractérisé en ce que**
- par rapport au locuteur, pour chaque mot prononcé, la suite de phonèmes P générée, et est stockée comme tuple K-P en association avec une forme canonique K stockée dans le lexique de prononciation, ,
- l'association stockée est amenée à un noeud d'entrée défini par la forme canonique K d'un réseau neuronal et
- dans le réseau neuronal, l'adaptation au locuteur fait l'objet d'un entraînement, la suite de phonèmes P étant imposée au réseau neuronal comme valeur cible pour des noeuds de sortie.

2. Procédé selon la revendication 1,
**caractérisé en ce que**
le réseau neuronal est un réseau dans lequel l'erreur quadratique moyenne est minimisée, comme fonction d'activation étant utilisée notamment la fonction sigmoïde Sc(x) ou la fonction tangente hyperbolique tanh(x).

3. Procédé selon la revendication 1 ou 2,
**caractérisé en ce que**
il est utilisé comme réseau neuronal un réseau orienté couche, à propagation avant et interconnexion complète entre les couches individuelles et dont la couche d'entrée présente une pluralité de noeuds comme fenêtres de phonèmes canoniques.

4. Procédé selon la revendication 3,
**caractérisé en ce que**
la couche d'entrée présente un noeud médian pour un phonème à considérer de la suite de phonèmes, et d'autres noeuds qui contiennent comme connaissance contextuelle les phonèmes temporellement voisins de part et d'autre du phonème à considérer de la forme canonique considérée.

5. Procédé selon la revendication 3 ou 4,
**caractérisé en ce que**
la dimension de fenêtre des fenêtres de phonèmes est prédéterminée de manière à ce qu'elles accueillent essentiellement la connaissance contextuelle au niveau des syllabes.

6. Procédé selon l'une des revendications précédentes,
**caractérisé en ce que**
l'entraînement est effectué sous forme de processus itératif, notamment sur la base de la règle d'apprentissage de la "Error Backpropagation".

7. Procédé selon la revendication 6,
**caractérisé en ce que**
- pour chaque itération, on détermine une séquence de modèles d'entraînement au moyen d'un générateur de nombres aléatoires,
- au terme de chaque itération, à l'aide d'un jeu de validation indépendant du matériel d'entraînement, on détermine la précision de transcription obtenue, et
- on poursuit les itérations tant que l'on obtient avec chaque nouvelle itération une augmentation de la précision de transcription du jeu de validation.

8. Procédé selon l'une des revendications précédentes,
**caractérisé en ce que**
au terme d'un processus d'entraînement, on ajoute dans le lexique de prononciation de la transcription entraînée sous forme canonique, au moins une suite de phonèmes spécifiques au locuteur.

9. Procédé selon la revendication 8,
**caractérisé en ce que**
au terme d'un cycle d'entraînement, pour chaque mot issu du lexique de prononciation, la forme canonique associée est présentée au réseau neuronal, et à partir de la valeur de sortie correspondante des noeuds de sortie, la transcription respective spécifique au locuteur est générée et stockée au niveau du mot.
